# EUROPEAN PATENT APPLICATION

(11) **EP 0 636 562 A1**
(43) Date of publication of application: **01.02.1995**
(21) Application number: 94109579.6
(22) Date of filing: 21.06.1994
(51) Int. Cl.: B65H 35/00, B26D 7/01, B26D 7/26, B41J 11/70

(54) **Tape cutter**

(30) Priority: 23.06.1993 JP 177400/93
(71) Applicant: BROTHER KOGYO KABUSHIKI KAISHA, Nagoya-shi, Aichi-ken (JP)
(72) Inventor: Mizuno, Naoyuki, c/o BROTHER KOGYO K.K., Nagoya-shi, Aichi-ken (JP); Hishida, Yukio, c/o Brother Kogyo K.K., Nagoya-shi, Aichi-ken (JP)
(74) Representative: Prüfer, Lutz H., Dipl.-Phys.

(57) **Abstract**

A tape cutter for cutting a tape having a width, the tape cutter including: a lower cutter portion with a blade receiving stand fixed thereto, the blade receiving stand having a cutting edge; an upper cutter portion provided connected to the lower cutter portion so that the upper cutter portion is movable relative to the lower cutter portion from an open condition to a cutting condition; an upper blade having a cutting edge, the upper blade being provided so as to move toward the blade receiving stand when the upper cutter portion is moved into the cutting condition, the cutting edge of the blade receiving stand and the cutting edge of the upper blade defining a cutting area when upper cutter portion is in the cutting condition; a tape guide for guiding the tape toward the cutting area so that the tape is brought into a predetermined relative posture with the cutting area.

## Description

### BACKGROUND OF THE INVENTION

### 1. Field of the Invention

The present invention relates to a tape cutter capable of cutting a tape produced in a tape printer, and more particularly to the tape cutter being capable of cutting a variety of tapes with different widths.

### 2. Description of the Related Art

Tapes produced with a tape printer can be used for a variety of purposes. Various objectives for such tapes require a variety of tapes with different widths. For example, a tape for being adhered to a video cassette as an identification label would be wider than a tape adhered to an audio cassette.

There has been known a conventional tape cutter for cutting different width tapes to specific lengths. The tape cutter is capable of cutting the four corners of tapes into rounded shapes, which are more aesthetically pleasing than cutting the tapes ends into straight lines. To allow this, a plurality of interchangeable blade holders, each corresponding to different width tape, are provided to the tape cutter. A blade is provided in each blade holder. Each blade is shaped for cutting the corners of the corresponding width tape into rounded shapes. A fixed blade is fixed to the interior of the tape cutter so as to confront a blade holder mounted in the tape cutter.

First, the blade holder corresponding to the width of the tape to be cut is mounted in the tape cutter. Next, one end of a tape to be cut is inserted into a tape insertion slot of the tape cutter and cut by moving the blade holder downward. The operation is repeated on the other end of the tape so that both ends of the tape are cut to a predetermined shape by the blade in the blade holder in cooperation with the fixed blade. When a tape with a different width is to be cut, the blade holder is removed and the correct width blade holder exchanged therefor. The tape cutter thus allows cutting both ends of a tape into predetermined shapes according to the tape width of each tape.

### SUMMARY OF THE INVENTION

However there has been known a problem with conventional tape cutters in that regardless of how carefully a user inserts a tape into and through the tape insertion slot, the tape sometimes moves at an angle, rather than unidirectionally, before it reaches the blade holder. When a tape shifts angularly in this way, its corners can not be cut by the blade into the predetermined curved shape. Both ends of the tape are therefore often cut in undesired shapes so that the cut tape appears unattractive.

In conventional tape cutters, the distance from the edge of an inserted end of the tape to the blade is set to a fixed length. Because of this, the tape can only be cut at the same standard distance from a lengthwise edge. As a result, there are limitations to the variations in tapes that can be produced by the tape cutter.

Further, the tape cutter requires maintaining a plurality of individual blade holders separately from the tape cutter. Each of the blade holders is small and easily lost. Also, when changing blade holders a user might be cut by accidentally touching the blade provided in each blade holder.

It is an objective of the present invention to overcome the above-described technical problems and provide a tape cutter capable of precisely cutting both edges of each of a variety of tapes with different tape widths, and moreover capable of cutting the edges of the tapes into predetermined shapes and optional distances from the ends of the tape. It is a further objective of the present invention to provide a tape cutter wherein a plurality of individual blade holders corresponding to tape widths of various tapes are housed in the tape cutter.

To achieve the above-described objectives, a tape cutter for cutting a tape having a width, comprises a lower cutter portion with a blade receiving stand fixed thereto, the blade receiving stand having a cutting edge; an upper cutter portion provided connected to the lower cutter portion so that the upper cutter portion is movable relative to the lower cutter portion from an open condition to a cutting condition; an upper blade having a cutting edge, the upper blade being provided so as to move toward the blade receiving stand when the upper cutter portion is moved into the cutting condition, the cutting edge of the blade receiving stand and the cutting edge of the upper blade defining a cutting area when upper cutter portion is in the cutting condition; and a tape guide for guiding the tape toward the cutting area so that the tape is brought into a predetermined relative posture with the cutting area.

To further improve the effects of the tape guide in another aspect of the present invention a pair of positioning members are provided on either side of the upper blade separated by a distance in the widthwise direction, the distance corresponding to the width of the tape, so that a tape guided toward the cutting area by the tape guide will pass between the positioning members and be prevented from moving in the widthwise direction.

In another aspect of the present invention, a tape stopper is provided for stopping a tape guided by the tape guide after an end of the tape passes between the upper blade and the blade receiving stand and past the cutting area. A tape margin adjusting means is also provided for adjusting a distance between the tape stopper and the cutting area.

When a plurality of not-in-use upper blade holders, each with an interior and an upper blade provided to its interior, each upper blade of the plurality of not-in-use upper blade holders having a width corresponding to a width of one of a plurality of different width tapes, are provided to the tape cutter, in a still further aspect of the present invention the upper cutter portion is movable relative to the lower cutter portion from the open condition to the cutting condition and further to a closed condition, a housing space being formed between the upper cutter portion and the lower cutter portion when the upper cutter portion is in the closed condition, the housing space being capable of housing the plurality of not-in-use upper blade holders.

### BRIEF DESCRIPTION OF THE DRAWINGS

The above and other objects, features and advantages of the invention will become more apparent from reading the following description of the preferred embodiment taken in connection with the accompanying drawings in which:
Fig. 1 is a perspective view of a tape cutter according to a preferred embodiment of the present invention;
Fig. 2 is a planer view of a lower cutter portion of the tape cutter shown in Fig. 1 with an upper cutter portion of the tape cutter removed;
Fig. 3 is a side view of the tape cutter showing a condition before the upper cutter portion is rotated;
Fig. 4 is a side view of the tape cutter showing a condition after the upper cutter portion has been rotated;
Fig. 5 (A) is a planer view showing a metal plate engaged in the upper cutter portion;
Fig. 5 (B) is a side view of the metal plate shown in Fig. 5 (A);
Fig. 5 (C) is a frontal view of the metal plate shown in Fig. 5 (A);
Fig. 6 (A) is a planer view showing a metal plate engaged in the lower cutter portion;
Fig. 6 (B) is a side view of the metal plate shown in Fig. 6 (A);
Fig. 6 (C) is a frontal view of the metal plate shown in Fig. 6 (A);
Fig. 7 is a planer view showing a T-shaped member of the tape cutter;
Fig. 8 is a side view of a tape stopper insertedly engaged with the tape stopper guide of the T-shaped member shown in Fig. 7;
Fig. 9 (A) is a cross-sectional view taken along line A-A in Fig. 2 showing the tape stopper insertedly engaged in the stopper guide portion;
Fig. 9 (B) is a cross-sectional view taken along line B-B in Fig. 2 showing the tape stopper insertedly engaged in the stopper guide portion;
Fig. 10 (A) is a planer view showing an upper blade holder for a 9 mm tape;
Fig. 10 (B) is a side view of the upper blade holder shown in Fig. 10 (A);
Fig. 10 (C) is a bottom view of the upper blade holder shown in Fig. 10 (A);
Fig. 11 (A) is a planer view showing an upper blade holder for a 12 mm tape;
Fig. 11 (B) is a side view of the upper blade holder shown in Fig. 11 (A);
Fig. 11 (C) is a bottom view of the upper blade holder shown in Fig. 11 (A);
Fig. 12 (A) is a planer view showing an upper blade holder for a 18 mm tape;
Fig. 12 (B) is a side view of the upper blade holder shown in Fig. 12 (A);
Fig. 12 (C) is a bottom view of the upper blade holder shown in Fig. 12 (A);
Fig. 13 (A) is a planer view showing an upper blade holder for a 24 mm tape;
Fig. 13 (B) is a side view of the upper blade holder shown in Fig. 13 (A);
Fig. 13 (C) is a bottom view of the upper blade holder shown in Fig. 13 (A);
Fig. 14 is a partial perspective view of the tape cutter showing an example of marks formed in the tape cutter for showing the distance from a tape guide to a tape cutting area; and
Fig. 15 is a partial perspective view showing an example of a gauge and a mark for showing the distance from an upper blade to a tape edge in a tape stopper and a slider guide portion.

### DETAILED DESCRIPTION OF THE PREFERRED EMBODIMENTS

A tape cutter 1 according to a preferred embodiment of the present invention will be described while referring to the accompanying drawings wherein like parts and components are designated by the same reference numerals to avoid duplicating description.

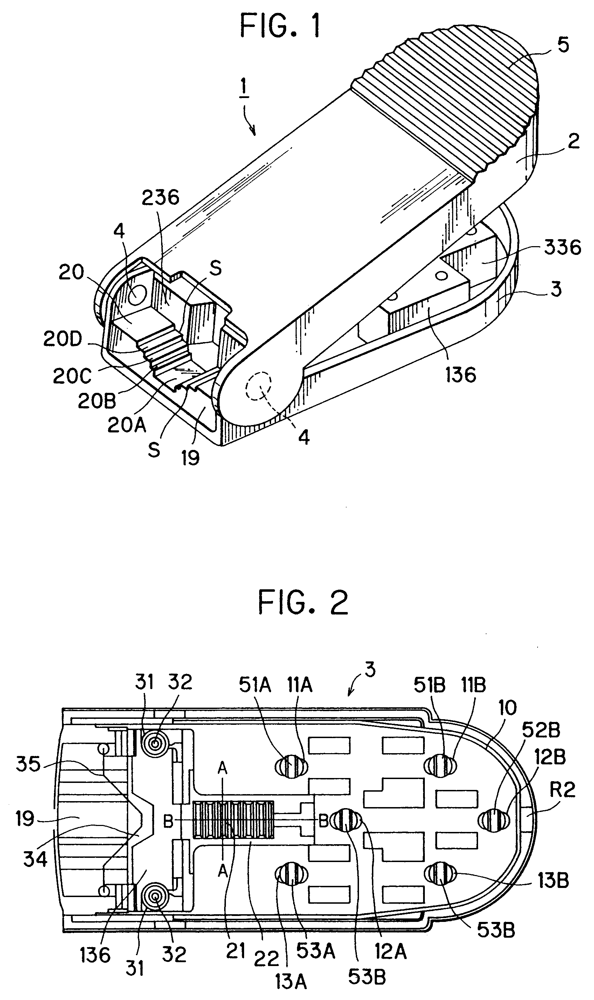

The tape cutter 1 includes an elongated upper cutter portion 2 and an elongated lower cutter portion 3. A pair of axes 4 are provided for connecting the upper cutter portion 2 to the lower cutter portion 3 at their tape-insertion ends (their left ends in Figs. 1 through 4) so that the upper cutter portion 2 is swingable on the axes 4, in relation to the lower cutter portion 3, between an open position and a closed position (to be described in further detail later). A tape guide 19 (to be described in further detail later) for guiding a tape to be cut is provided between the axes 4. Blade holders 136, 236, 336, and 436 (to be described in further detail later) are accommodated between the upper cutter portion 2 and the lower cutter portion 3.

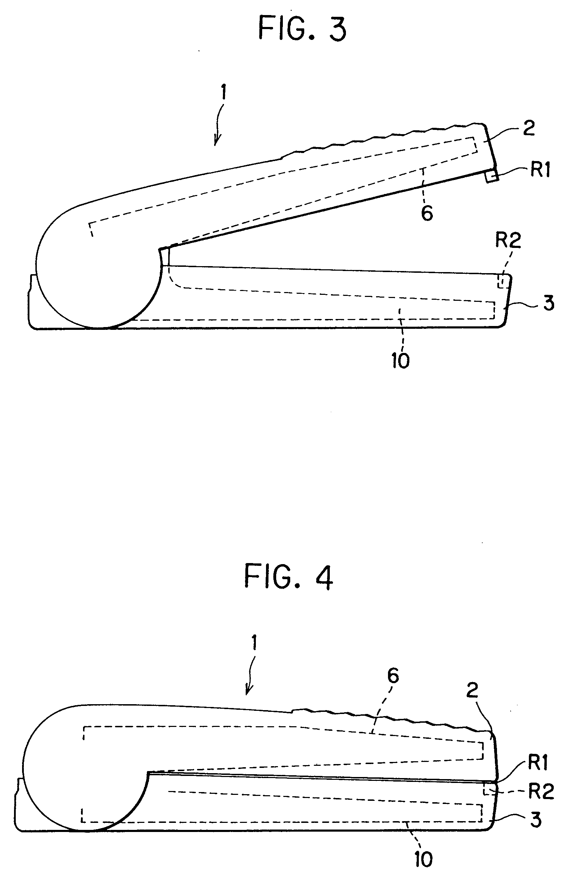

The upper cutter portion 2 is formed from a resin or alloy material such as an ABS alloy. A pressing portion 5 is provided to the top surface at the back end (the end opposite the tape-insertion end) of the upper cutter portion 2. A lock claw R1 (see Fig. 3) is mounted to the back end of the upper cutter portion 2.

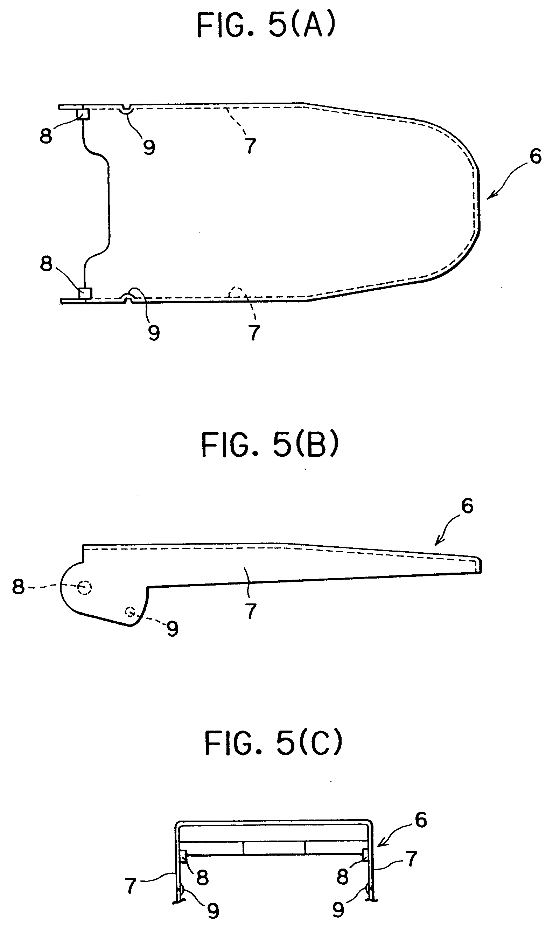

A metal plate 6, shown in Figs. 5 (A) through 5 (C), is engaged to the interior upper surface of the upper cutter portion 2 as shown in Figs. 3 and 4. The metal plate 6 is formed from a pair of mutually confronting walls 7 in an elongated shape substantially analogous to the shape of the upper cutter portion 2. Rotation pins 8 are fixed by, for example, caulking, one to each of the walls 7, near the tape-insertion end of the upper cutter portion 2. The rotation pins 8 are provided so as to also be mutually confronting. A pair of mutually confronting protrusions 9 are formed to the walls 7 in the vicinity of the rotation pins 8.

The lower cutter portion 3 is formed from a resin or alloy such as an ABS alloy as is the upper cutter portion 2. As shown in Figs. 2 through 4, a lock groove R2 for resiliently locking (see Fig. 4) with the lock claw R1 the upper cutter portion 2 is formed in the back end of the lower cutter portion 3. Six holder support shafts 51A, 51B, 52A, 52B, 53A, and 53B are formed to the lower cutter portion 3 so as to protrude upright toward the upper cutter portion 2 (that is, when the upper cutter portion 2 is connected to the lower cutter portion 3). The holder support shafts 51A through 53B are paired in the horizontal direction shown in Fig. 2 (i.e., holder support shafts 51A and 51B form a first pair, holder support shafts 52A and 52B form a second pair, and holder support shafts 53A and 53B form a third pair).

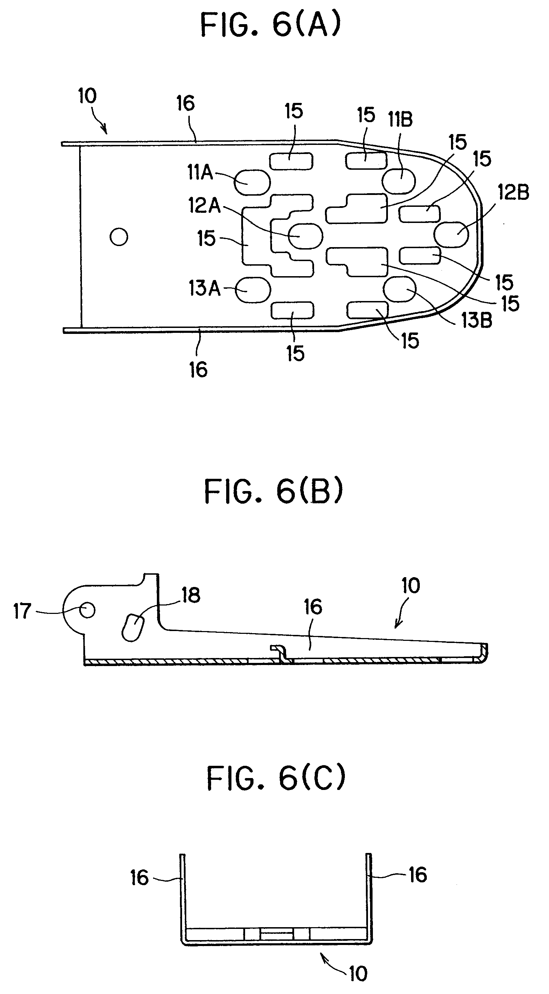

As shown in Fig. 2, a metal plate 10 is provided in engagement with the lower cutter portion 3. As shown in Fig. 6 (A), the metal plate 10 is formed in an elongated shape similar to that of the lower cutter portion 3. Six elliptical holes 11A, 11B, 12A, 12B, 13A, and 13B are formed in the metal plate 10 at positions corresponding to the holder support shafts 51A, 51B, 52A, 52B, 53A, and 53B. Therefore, the holder support shafts 51A, 51B, 52A, 52B, 53A, and 53B engage with corresponding elliptical holes of the elliptical holes 11A through 13B when the metal plate 10 is engaged with the lower cutter portion 3. Several escape holes 15 are formed in the metal plate 10 in the vicinity of each of the elliptical holes 11A through 13B. The escape holes 15 are shaped and positioned in the metal plate 10 so as to allow positioning members 138, 238, 338, and 438 (to be described later) of the upper blade holders 136, 236, 336, and 446 to pass therethrough when the upper blade holders 136, 236, 336, and 446 are stored in the tape cutter 1 (in a manner to be described later). The shape and position of escape holes 15 are designed so that any support hole can be mounted onto any holder support shaft.

As shown in Fig. 6 (B), wall portions 16 are formed on either side of the metal plate 10. A pin hole 17 is formed in each wall portion 16 at the tape-insertion end thereof. The pin holes 17 are shaped so as to allow insertion of the rotation pins 8 of the metal plate 6. When the rotation pins 8 are engaged in the pin holes 17, the upper cutter portion 2 is swingably supported in relation to the lower cutter portion 3. An elongated hole 18 is formed in each wall portion 16 near each pin hole 17. The elongated holes 18 are formed so that corresponding protrusions 9 formed in the wall portion 7 of the metal plate 6 are freely engagable therewith. When the protrusion 9 are engaged in the elongated holes 18, and the rotation pins 8 are engaged in the pin holes 17, swinging movement of the upper cutter portion 2 on the axes 4 is limited to the extent that the protrusions 9 can move within corresponding elongated holes 18.

Next, an explanation of the tape guide 19 positioned at the tape-insertion end of the lower cutter portion 3 will be provided while referring to Figs. 1 and 2. The tape guide 19 is formed from a resin material such as polyacetal. A tape guide portion 20 formed by two opposing stair-shaped portions S is provided to the tape guide 19. Four tape guide grooves 20A, 20B, 20C, and 20D are defined by the steps of the stair-shaped portions S. The tape guide grooves 20A through D are for guiding four different width tapes into the tape cutter 1. The tape guide portion 20 in the present embodiment is shaped for guiding 9 mm, 12 mm, 18 mm, and 24 mm width tapes. That is, the tape guide groove 20A is provided with a groove width of about 9 mm for guiding a 9 mm tape, the tape guide groove 20B is provided with a groove width of about 12 mm for guiding a 12 mm tape, the tape guide groove 20C is provided with a groove width of about 18 mm for guiding an 18 mm tape, and the tape guide groove 20D is provided with a groove width of about 24 mm for guiding a 24 mm tape.

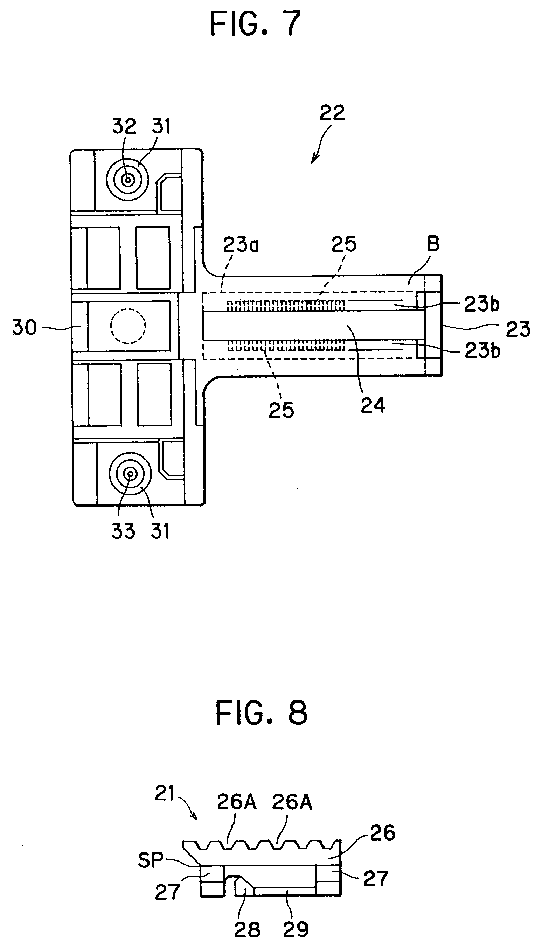

As shown in Fig. 2, a T-shaped member 22 is provided adjacent to the tape guide 19. The T-shaped member 22 is formed from a resin material such as polyacetal as is the tape guide 19. As shown in Fig. 7, a stopper guide portion 23 forms the trunk and an upper blade holder support 30 forms the cross of the T-shaped member 22.

The stopper guide portion 23 includes a base B and a slider guide 23a. The slider guide 23a is mounted on the base B so as to protrude away from the base B towards the upper cutter portion 2. The slider guide 23a includes two inwardly confronting slats 23b that are separated by a space. A guide groove 24 is defined by the space between the two slats 23b. Lock grooves 25 are formed to the lower surface of each slat 23b.

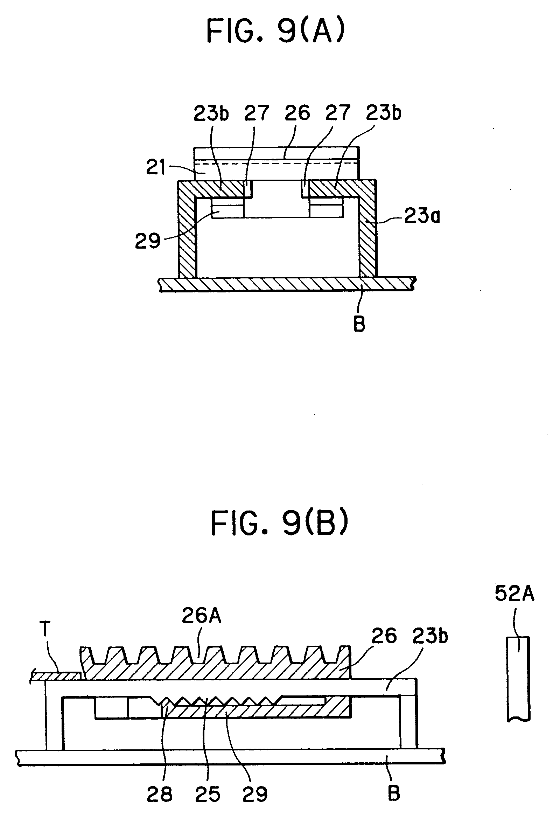

As shown in Figs. 2, 9 (A), and 9 (B), a tape stopper 21 shown in Fig. 8 is provided insertedly engaged in the stopper guide portion 23. The tape stopper 21 is formed from a resin material such as polyacetal as are the tape guide 19 and the T-shaped member 22. An operation portion 26 is provided to the tape stopper 21 so as to be exposed when the tape stopper 21 is engaged with the stopper guide portion 23. A user places his/her thumb on the operation portion 26 for sliding the tape stopper 21 along the guide groove 24 in a manner to be described later. Grooves 26A are formed to the upper surface of the operation portion 26 for providing extra friction between the user's thumb and the operation portion 26. A stopping point SP of the tape stopper 21 corresponds to where a tape T guided by the tape guide 19 abuts the tape stopper 21 (see Fig. 9 (B)). Grooves 27 for engaging with the slats 23b are formed in opposites sides (one side shown in Fig. 8, and the other side not shown) of the tape stopper 21. A resilient lock arm 29 with a locking protrusion 28 is formed the bottom portion of the tape stopper 21 so as to be encased in the slider guide 23a when the tape stopper 21 is engaged with the stopper guide portion 23. When the tape stopper 21 is engaged with the slider guide portion 23a, the slats 23b are engaged in the grooves 27 and the lock protrusion 28 is resiliently locked in lock grooves 25. The stopper 21 can therefore be slid within the guide groove 24 at increments defined by the inter-groove distance of the lock grooves 25.

One of a pair of upright holder support shafts 31 is provided near either end of the upper blade holder support 30. Each holder support shaft 31 is formed into a hollow cylindrical shape. Coil springs 32 and 33 are inserted in each holder support shaft 31 so as to protrude upward, out of its respective holder support shaft 31.

Further, as shown in Fig. 2, a blade receiving stand 34 is provided between the holder support shafts 31 in the upper blade holder support 30. The blade receiving stand 34 is constructed in the same manner as described in U.S. Patent 5,271,789 incorporated by reference herein. A tape pressing wire 35 is provided in the lower cutter portion 3 so as to span across the tape guide 19. The resilience of the tape pressing wire 35 presses an inserted tape against the blade receiving stand 34.

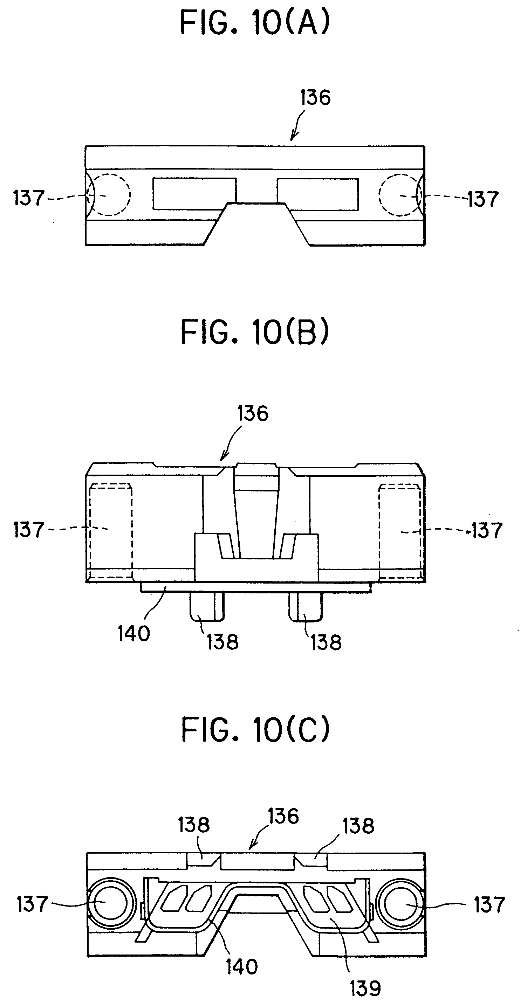

As shown in Figs. 10 (A) through 13 (C), in the present embodiment, four types of upper blade holders 136, 236, 336, and 436 are provided with the tape cutter 1. The four types of upper blade holders 35 correspond to the four types of tape (i.e., 9 mm tape, 12 mm tape, 18 mm tape, and 24 mm tape) guidable by the four tape guide grooves 20A through 20D in the tape guide 19. All the upper blade holders 136, 236, 336, and 436 have the same basic structure, the only differences being in the shape of upper blades 137, 237, 337, and 437 provided to the interior of respective upper blade holders 136, 236, 336, and 436 and the distance between pairs of positioning members 138, 238, 338, and 438 depending from the lower edge of respective upper blade holders 136, 236, 336, and 436.

First, an explanation will provided for the upper blade holder 136 for cutting 9 mm tape while referring to Figs. 10 (A) through 10 (C). The upper holder 136 is formed from a resin or alloy such as ABS alloy into a substantially right-angled parallelepiped shape. A pair of support holes 137 are formed partially through opposite ends of the upper blade holder 136 so as to be closed off at their upper ends as shown in the cross-sectional side view of Fig. 9 (B). Each support hole 137 is formed with an inner diameter that is larger than the outer diameter of the holder support shafts 31. Therefore each holder support shafts 31 and its coil spring 32 or 33 can be inserted into a corresponding support hole 137 and thereby support the upper blade holder 136. When the upper blade holder 136 is supported in this way, the lower surface of the metal plate 6 engaged with the upper cutter portion 2 abuts the upper surface of the upper blade holder 136.

A pair of positioning members 138 are provided depending from the lower edge of the upper blade holder 136 so that the positioning members are separated by a distance corresponding to the width of a 9 mm tape. Further, an upper blade fixing portion 139 is formed to the interior of the upper blade holder 136 as shown in Fig. 10 (C). An upper blade 140 is provided in a curved shape to the interior of the upper blade fixing portion 139. The upper blade 140 works cooperatively with the blade receiving stand 34 in order to half cut a 9 mm tape that is between the upper blade 140 and the blade receiving stand 34 and between the pair of positioning members 138. Half cutting a tape made from a base tape, an adhesive layer, and a peel-off paper means to cut through the base tape and the adhesive layer but not through the peel-off paper. This half-cutting operation is described in U.S. Patent No. 5,271,789 incorporated by reference herein. As shown in Fig. 10 (C), the upper blade 140 is formed with a predetermined curved shape at portions thereof corresponding to the edges of an inserted tape. Therefore, a tape half-cut by the upper blade 140 will therefore have the corners of its base tape and adhesive layer cut into a predetermined curve corresponding to the curve of the upper blade 140.

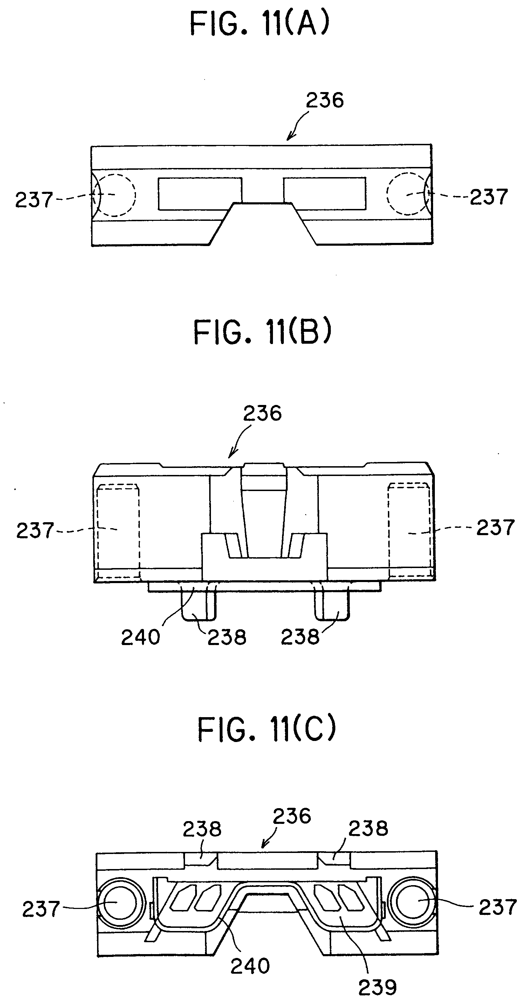

When compared to the upper blade holder 136 for cutting a 9 mm tape, the upper blade holder 236 has basically the same structure except for two differences. As shown in Fig. 11 (B), the first difference is that positioning members 238 are provided to the blade holder 236 separated by a distance corresponding to the width of a 12 mm wide tape. As shown in Fig. 11 (C), the second difference lies in the upper blade 240, for half cutting a 12 mm tape, provided to the interior of the blade holder 236. The upper blade 240 is curved to correspond to a 12 mm tape.

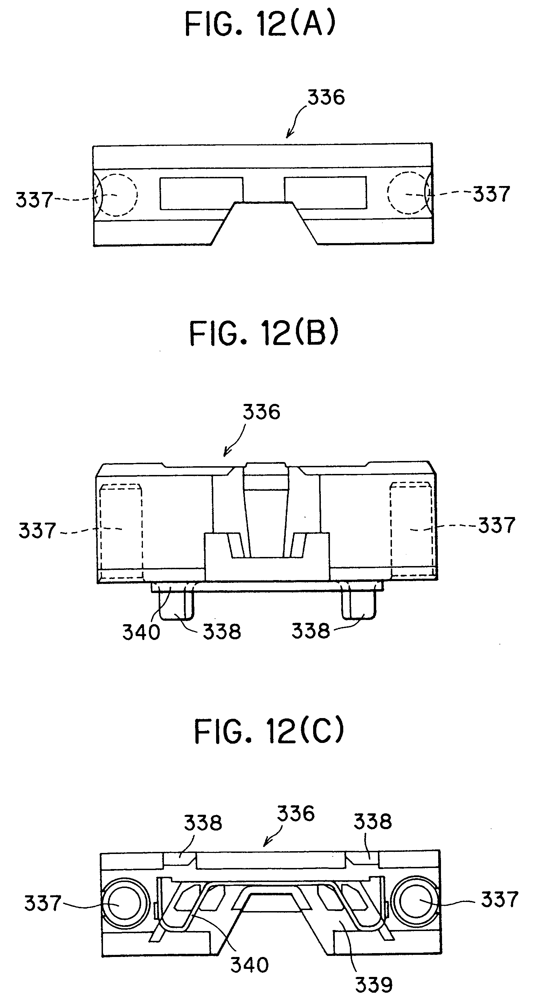

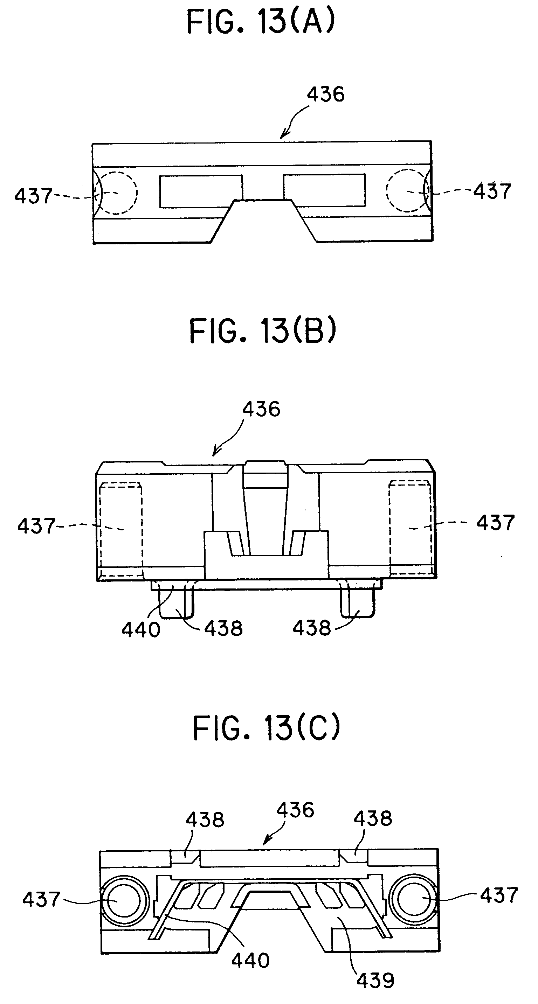

Similarly, the upper blade holder 336 with the upper blade 340 provided to its interior for half cutting a 18 mm tape, when compared to the upper blade holder 136 for cutting a 9 mm tape and the upper blade holder 236 for cutting a 12 mm tape, has basically the same structure except for two differences. As shown in Fig. 12 (B), the first difference is that the positioning members 338 are separated by a distance corresponding to the width of a 18 mm wide tape. As shown in Fig. 12 (C), the second difference is that the upper blade 340, provided to the interior of the upper blade fixing portion 339 for half cutting an 18 mm tape, is curved to correspond to a 18 mm tape. Similarly, the upper blade holder 436 with an upper blade 440 for half cutting a 24 mm tape fixed to its interior, when compared to the upper blade holder 136 for cutting a 9 mm tape, the upper blade holder 236 for cutting a 12 mm tape, and the upper blade holder 336 for cutting a 18 mm tape, has basically the same structure except for two differences. As shown in Fig. 13 (B), the first difference is that the positioning members 438 are separated by a distance corresponding to the width of a 24 mm wide tape. As shown in Fig. 13 (C), the second difference is that the upper blade 440, provided to the interior of the upper blade fixing portion 439 for half cutting an 24 mm tape, is curved to correspond to a 24 mm tape.

Next, an explanation of half cutting a 9 mm tape using the tape cutter 1 constructed as described above will be provided. First, because, in this example, a 9 mm tape is to be cut, the upper holder 136 is selected. It should be noted that the four types of upper blade holders 136, 236, 336, and 436 are interchangeable. Therefore, the following procedures can be applied to any of the upper blade holders. That is, when a 12 mm tape to be cut, the upper blade holder 236 selected and the following procedures followed accordingly. Similarly, the upper blade holder 336 would have been selected for an 18 mm tape, and the upper blade holder 436 would have been selected for cutting a 24 mm tape.

Next, the holder support shafts 31 in the upper holder support 30, and the coil springs 132 and 133 positioned to the interior of the holder support shafts 31, are inserted into the support holes 137 of the upper blade holder 136. From this, the upper blade holder 136 is supported by the coil springs 32 and 33 and the holder support shafts 31.

Next, the tape stopper 21 is slid in the guide groove 24 to an optional desired position. The lock protrusion 28 of the resilient lock arm 29 locks in a lock groove 25 of the stopper guide portion 23, thereby locking the tape stopper 21 in the desired position. This sets the distance (tape margin) between the edge of an inserted tape and the are of the inserted tape where the upper blade 140 provided to the interior of the upper blade holder 136 will half cut the inserted tape. In this way, by sliding the tape stopper 21, the margin of the tape to be cut can be freely set. The maximum tape margin is limited in the present embodiment to where the tape stopper 21 abuts the holder support shaft 52A.

Next, a 9 mm tape to be cut is inserted through the tape guide groove 20A, with a width corresponding to the 18 mm tape, of the tape guide portion 20 formed in the tape guide 19. The tape guide groove 20A guides the tape into the tape cutter 1 toward the depending pair of positioning members 138 at the lower edge of the upper blade holder 136. The tape is further inserted through the positioning members 138. The tape is unidirectionally guided by the tape guide groove 20A and the positioning members 138 until its edge abuts the tape stopper 21. The positioning members 138 unidirectionally guide a 9 mm tape inserted into the tape cutter 1 so that the inserted 9 mm tape does not shift in its widthwise direction when the tape is inserted through both of the members 138. From this, a 9 mm tape will be unidirectionally guided until it abuts the stopper point SP of the tape stopper 21. The tape positioning members 138 thereby guide the tape to the tape stopper 21 without the tape shifting in its widthwise direction. By this, the tape is set at a predetermined half-cut position.

Next, the pressing portion 5 of the upper cutter portion 2 is pressed down and the upper cutter portion 2 is rotated around the axes 4. The rotation of the upper cutter portion 2 presses the lower surface of the metal plate 6 against the upper blade holder 136. The upper blade holder 136 is therefore pressed downward against the urging of the coil springs 32 and 33. The upper blade 140 provided to the interior of the upper blade holder 136, in cooperation with the blade receiving stand 34, cuts through the base tape and the adhesive layer of the tape so that only the peel-off sheet remains uncut. At this point, as was described while referring to Fig. 10, the tape is half cut into a predetermined shape according to the curve of the upper blade 140 provided to the interior of the upper blade holder 136.

The tape is then withdrawn from the tape cutter 1. The uncut end is inserted into the tape cutter 1 and half cut in the same manner. By this, the four corners of the tape, two at each end of the tape, are half cut to the predetermined shape by the upper blade 40 and the blade receiving stand 34. This concludes the process for half cutting the tape.

When the tape cutter 1 is not in use, the three upper blade holders 236, 336, and 436 (i.e., the three upper blade holders that were not used in the half cutting operation) are stored within the tape cutter 1. First, each pair of support holes 237, 337, and 437 of each of the three upper blade holders 236, 336, and 436 is mounted onto a pair of holder support shafts 51A, 51B, 52A, 52B, 53A, and 53B provided to the lower cutter portion 3 by inserting the holder support shafts 51A, 51B, 52A, 52B, 53A, and 53B into the support holes 237, 337, and 437. By this, the three upper blade holders 236, 336, and 436 become housed in the lower cutter portion 3. Next, the upper cutter portion 2 is further rotated. The positioning member 238, 338, and 438 pass a predetermined distance downward through corresponding escape hole 15. The lock claw R1, provided to the upper cutter portion 2, and the lock groove R2, formed in the lower cutter portion 3, are then resiliently lock together. Because all four of the upper blade holders 136, 236, 336, or 436 (which are separated units from the tape cutter 1) are housed in the tape cutter 1 when the tape butter is not being used, there is no possibility of the upper blade holders 136, 236, 336, or 436 being lost.

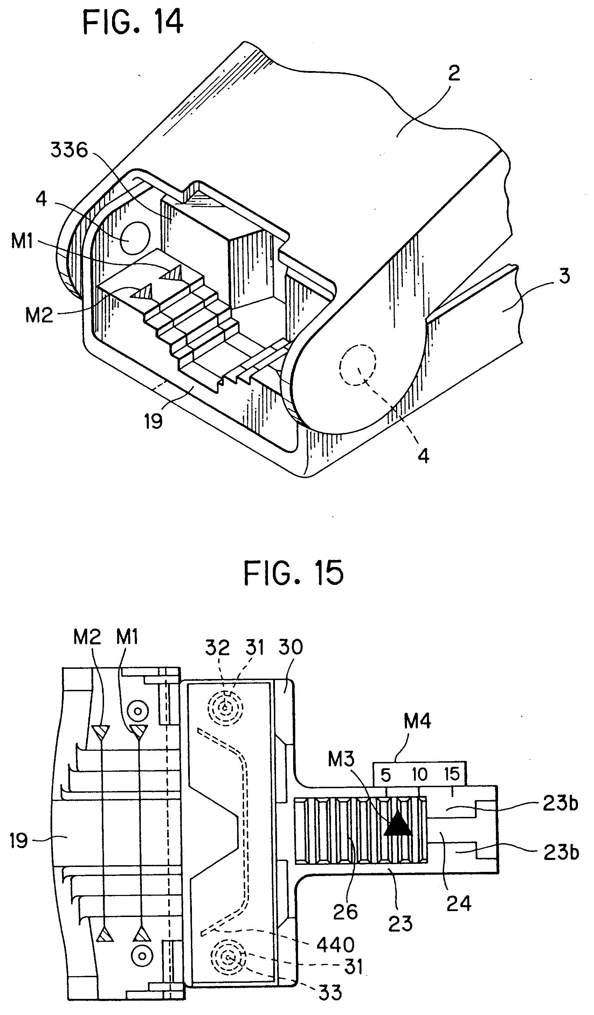

As shown in Fig. 14, marks can be provided to the tape guide 19 to show the distance to the tape cutting area (i.e., the position where the upper blade 140, 240, 340, or 440 and the blade receiving stand 34 will half cut an inserted tape). In the example shown in Fig. 14, a mark M1 and a mark M2 are provided to the tape guide 19. Mark M1 indicates the position 15 mm from the tape cutting area and mark M2 indicates the position 20 mm from the tape cutting area. Marks M1 and M2 make the tape cutter more convenient for users. Marks M1 and M2 can be formed by printing, engraving, or other method.

As shown in Fig. 15, an indicator mark M3 and a gauge M4 can be formed in addition to the marks M1 and M2. The indication mark M3 is formed on the operation portion 26 of the tape stopper 21. The gauge M4 is formed at the side of the stopper guide portion 23 so as to confront the indication mark M3. The indicator mark M3 and the gauge M4 together show the distance (tape margin) between the end of a tape abutting the tape stopper 21 and the portion of the tape that will be cut. The indicator mark M3 and the gauge M4 allow easy setting of the length of the tape margin when the tape margin is being set with the tape stopper 21. In the example shown in Fig. 15, it can easily be understood that the length of the tape margin is set to 7 mm.

In the tape cutter 1 described in detail above in the preferred embodiment, a tape guide 19 including a plurality of tape guide grooves 20A, 20B, 20C, and 20D for guiding various width tapes is positioned to a lower cutter portion 3. Additionally, pairs of positioning members 138, 238, 338, and 438 depend from respective lower edge of upper blade holders 136, 236, 336, or 436. Positioning members 138, 238, 338, and 438 of each pair are separated by a distance which matches the width of a corresponding tape to be cut. The upper blade holders 136, 236, 336, or 436 are supported at their support holes 137, 237, 337, or 437 on a pair of holder support shafts 31 formed in the upper blade holder support 30 of the T-shaped member 22, and coil springs 32 and 33 positioned to the interior of the holder support shafts 31, by the holder support shafts 31 and the coil springs 32 and 33 being inserted into respective support holes 137, 237, 337, or 437. Because a tape is inserted into the tape cutter 1 as guided cooperatively by the corresponding tape guide groove 20A through 20D and respective positioning members 138, 238, 338, or 438, the tape is unidirectionally guided and prevented from shifting in the widthwise direction during insertion. Because of this, the tape can be inserted into the tape cutter 1 without shifting in the widthwise direction even when a great distance separates the tape guide 19 and the tape stopper 21. That is, an inserted tape is accurately brought into a predetermined posture relative to the blade receiving stand 34, and consequently the upper blade 140, 240, 340, or 440 (whichever is mounted on the shafts 31), at the cutting area. As a result, ends of a tape can be cut to a predetermined shape according to the curved condition of the upper blade 140, 240, 340, or 440 of the blade holder supported at the tape cutting area.

Because a tape stopper 21 can be slid following a guide groove 24 of the slider guide portion 24, and because a lock protrusion 28 of a resilient lock arm 29 formed in the tape stopper 21 can lock the tape stopper 21 in an optional position by engaging with grooves 25 formed in a stopper guide portion 23, the distance (tape margin) between the edge of the tape and the position where the tape will be but can be freely changed and set. Further, by providing the tape cutter 1 with marks M1 and M2 and an indication mark M3 and a gauge M4 as shown in Fig. 15, a desired tape margin can be accurately set when setting the length of the tape margin using the tape stopper 21.

Further, when the tape cutter 1 is not in use, because one of the upper blade holders 136, 236, 336, and 436 is supported by the support shafts 31 and the coil springs 32 and 33, and because the remaining three of the upper blade holders 136, 236, 336, and 436 are supported by the three pairs of holder support shafts 51A, 51B, 52A, 52B, 53A, and 53B, the upper holders 136, 236, 336, and 436 need not be stored separately from the tape cutter 1 and therefore there is no fear of losing any of the upper blade holders 136, 236, 336, and 436. Also, the upper cutter portion 2 and the lower cutter portion 3 can be locked together by the lock claw R1 of the upper cutter portion 2 and the lock groove R2 of the lower cutter portion 3. Because of this, the tape cutter 1 becomes compact.

While the invention has been described in detail with reference to specific embodiments thereof, it would be apparent to those skilled in the art that various changes and modifications may be made therein without departing from the spirit of the invention.

For example, although the tape was described as being half-cut by cooperative action between the upper blade 40 and the blade receiving stand 34 in the above-described embodiment, the tape cutter could be structured to completely cut the tape.

The present invention as described above provides a tape cutter that can accurately and precisely cut both ends of a variety of tapes having different widths to a predetermined shape. Also, the tape cutter can cut tapes an optional position from an end of the tape. Further, the plurality of upper blade holders provided for the different width tapes can be stored housed in the tape cutter.

## Claims

1. A tape cutter for cutting a tape having a width, the tape cutter comprising:
a lower cutter portion with a blade receiving stand fixed thereto, the blade receiving stand having a cutting edge;
an upper cutter portion provided connected to the lower cutter portion so that the upper cutter portion is movable relative to the lower cutter portion from an open condition to a cutting condition;
an upper blade having a cutting edge, the upper blade being provided so as to move toward the blade receiving stand when the upper cutter portion is moved into the cutting condition, the cutting edge of the blade receiving stand and the cutting edge of the upper blade defining a cutting area when upper cutter portion is in the cutting condition; and
a tape guide for guiding the tape toward the cutting area so that the tape is brought into a predetermined relative posture with the cutting area.

2. A tape cutter as claimed in claim 1 wherein the tape guide has a tape guide portion defining a groove having a length extending in a lengthwise direction that leads to the cutting area, the groove also having a width extending in a widthwise direction perpendicular to the lengthwise direction, the width of the groove being substantially the same as the width of the tape so that the tape is guided unidirectionally toward the cutting area when inserted through the groove.

3. A tape cutter as claimed in claim 1 or 2 wherein the tape guide portion defines a plurality of grooves, each groove having a width corresponding to a width of a tape from a plurality of different width tapes.

4. A tape cutter as claimed in one of claims 1 to 3, further comprising a pair of positioning members provided on either side of the upper blade separated by a distance in the widthwise direction, the distance corresponding to the width of the tape, so that a tape guided toward the cutting area by the tape guide will pass between the positioning members and be prevented from moving in the widthwise direction.

5. A tape cutter as claimed in one of claims 1 to 4, further comprising:
a tape stopper for stopping a tape guided by the tape guide after an end of the tape passes between the upper blade and the blade receiving stand and past the cutting area; and
a tape margin adjusting means for adjusting a distance between the tape stopper and the cutting area.

6. A tape cutter as claimed in claim 5 wherein the tape margin adjusting means further comprises:
a slide guide member in sliding contact with the tape stopper for slidingly guiding the tape stopper; and
a locking means for locking the tape stopper at a desired position on the slide guide member.

7. A tape cutter as claimed in claim 6 wherein the locking means further includes:
a plurality of lock walls formed in the slide guide member aligned in a direction followed by the tape stopper when the tape stopper is slidingly guided by the slide guide member, the plurality of lock walls defining a plurality of lock grooves; and
a resilient arm formed to the tape stopper so as to abut against lock walls of the plurality of lock walls as the tape stopper is slidingly guided, the resilient arm resiliently deforming from a natural shape into a compressed shape when abutted against a lock wall, the resilient arm returning to the natural shape after overcoming the lock wall, thereby locking in a lock groove defined by the lock wall.

8. A tape cutter as claimed in one of claims 1 to 7, further comprising an upper blade holder provided between the upper cutter portion and the lower cutter portion so as to move toward the cutting area when the upper cutter portion is moved into the cutting condition, the upper blade holder having an interior, the upper blade being housed substantially in the interior of the upper blade holder, preferably a pair of positioning members being formed to the upper blade holder.

9. A tape cutter as claimed in claim 8, further comprising a supporting means for supporting the upper blade holder so that when the upper blade holder is supported by the supporting means and when the upper cutter portion is moved into the cutting condition, the upper blade of the upper blade holder moves towards the cutting area.

10. A tape cutter as claimed in claim 9, wherein the supporting means includes:
a support portion provided to each of the plurality of upper blade holders, each support portion defining a pair of support holes separated by a distance and each support hole of the pair of support holes having an inner diameter;
a pair of shafts provided to the lower cutter portion on opposites sides of the blade receiving stand as separated by a distance in the widthwise direction, the shafts formed so as to protrude toward the upper cutter portion, each shaft of the pair of shafts having an outer diameter, the outer diameter of each shaft being smaller than the inner diameter of each support hole of the pair of support holes so that either shaft can be inserted into either support hole of the pair of support holes; and
a spring provided to each shaft of the pair of shafts for urging an upper blade holder mounted on the pair of shafts toward the upper cutter portion.

11. A tape cutter as claimed in one of claims 1 to 10, further comprising a plurality of not-in-use upper blade holders each with an interior and an upper blade provided to its interior, each upper blade of the plurality of not-in-use upper blade holders having a width corresponding to a width of one of a plurality of different width tapes; and wherein the upper cutter portion is movable relative to the lower cutter portion from the open condition to the cutting condition and further to a closed condition, a housing space being formed between the upper cutter portion and the lower cutter portion when the upper cutter portion is in the closed condition, the housing space being capable of housing the plurality of not-in-use upper blade holders.

12. A tape cutter as claimed in one of claims 1 to 11, further comprising a lock means for locking the upper cutter portion into the closed condition.

13. A tape cutter as claimed in claim 11 or 12, further comprising:
a pair of shafts for each not-in-use upper blade holder, each pair of shafts being provided to the lower cutter portion in the housing space separated by a distance. each pair of shafts formed so as to protrude toward the upper cutter portion, each shaft having a diameter; and
a support portion provided to each of the not-in-use upper blade holders, each support portion defining a pair of support holes separated by a distance corresponding to the distance separating each pair of shafts and each support hole having a diameter larger than the diameter of each shaft.
